# EUROPEAN PATENT SPECIFICATION

(11) **EP 1 150 772 B1**
(45) Date of publication and mention of the grant of the patent: **02.01.2008**
(21) Application number: 99962905.8
(22) Date of filing: 29.11.1999
(51) Int. Cl.: B01L 3/02, G01N 35/10

(54) **UNIFORMLY EXPANDABLE MULTI-CHANNEL PIPETTOR**
EINHEITLICH EXPANDIERBARES VIELFACH-KANAL-PIPETTIERGERÄT
DISPOSITIF DE PIPETAGE MULTIVOIES EXTENSIBLE UNIFORMEMENT

(30) Priority: 15.12.1998 US 211767
(43) Date of publication of application: 07.11.2001
(73) Proprietor: Matrix Technologies Corporation, Hudson, NH 03051 (US)
(72) Inventor: ALLEN, Dave, Marlborough, MA 01752 (US); ZIER, Robert, H., Annapolis, MD 21403 (US); KALMAKIS, George, P., Reading, MA 01867 (US); TORTI, Victor, A., Brookline, NH 03033 (US); NELSON, Gary, E., Hollis, NH 03049 (US)
(74) Representative: Dronne, Guy
(86) International application number: PCT/US1999/028158
(87) International publication number: WO 2000/035584

(56) References cited:
- JP-A- 1 050 928
- US-A- 5 061 449

## Description

### Field of The Invention

This invention relates generally to liquid transfer devices used in laboratories and, more particularly, to a multi-channel pipetting device which enables the user to uniformly, rapidly and accurately adjust the spacings between pipette tips.

### Background of The Invention

Pipetting systems are used in laboratories for the transfer of relatively small quantities of liquids. The liquid is normally drawn into the tips by suction and is subsequently released into the wells of microtiter plates or other receptacles. Frequently the transfer involves patient samples which are moved from one set of spaced receptacles to another set of receptacles having a different spacing. A multi-channel pipettor capable of being simply manipulated to vary the spacing between the pipette tips is often used for this purpose. Typically, the pipettor has a tip removing assembly that, with a minimum of force, removes tips safely and efficiently regardless of the positions of the tips and their fittings on the pipettor. One shortcoming of some prior art pipettors is that the pipette tips can only be adjusted between two uniform standard spacings of the receptacles. The standard settings must be preselected prior to manufacture. An example of such a prior art structure is found in U.S. Patent No. 5,061,449.

A second type of multi-channel pipettor, such as that shown in U.S. Patent No. 5,057,281, allows the spacings between the tip fittings to be varied by the user. However, the spacings between each fitting must be individually set. Thus, considerable manipulation is required to move the tip fittings from one set of spacings to another and it is difficult to accurately set the tip fittings to the desired spacings.

Therefore, it is desirable to have a multi-channel pipettor in which the tip fittings may be quickly and accurately set at a variety of uniform spacings. Moreover, it is desirable to easily vary the spacings while maintaining uniform spacing between tip fittings.

The document NL-A-6504453 describes a multi-channel pipetting system having a pantographic linkage which allows the maintenance of identical spacings between adjacent tip fittings, and an adjustable stop which consists of an element movable along a rod which is not connected to the pantographic linkage.

### Summary

The foregoing drawbacks of existing pipetting systems are overcome by the pipetting system of the present invention which uniformly and accurately spaces the tip fittings within a range of spacings, while still providing for easy tip removal. Moreover, the tip fittings may be rapidly moved from one set of uniform spacings to another. In addition, a desired spacing may be readily adjustably set.

The embodiment of the invention is a multi-channel pipetting system according to claim 1.

### Brief Description of The Drawings

The objects, advantages and features of this invention will be more clearly appreciated from the following detailed description when taken in conjunction with the accompanying drawings in which:
FIG. 1 is a side elevational view of the multi-channel pipettor of this invention;
FIG. 2 is a cross-sectional side view of the multi-channel pipettor of FIG. 1 showing the pipettor tips and tip fittings in a closely spaced position;
FIG. 3 is a partial cross-sectional view of the pipettor of FIG. 2 showing the tip fittings and tips in the position of FIG. 2;
FIG. 4 is a partial cross-sectional view of the pipettor of FIG. 2 showing the tip fittings and tips.in an intermediate spaced position;
FIG. 5 is a partial cross-sectional view of the pipettor of FIG. 2 showing the tip fittings and tips with the maximum spacing;
FIG. 6 is a cross-sectional view of the pipettor taken along the section line 6-6 in FIG. 1;
FIG. 7 is a cross-sectional view of the pipettor taken along the section line 7-7 in FIG. 1; and
FIG. 8 is a bottom plan view of the pipettor of FIG. 1 in which the tip fittings are not shown.

### Detailed Description

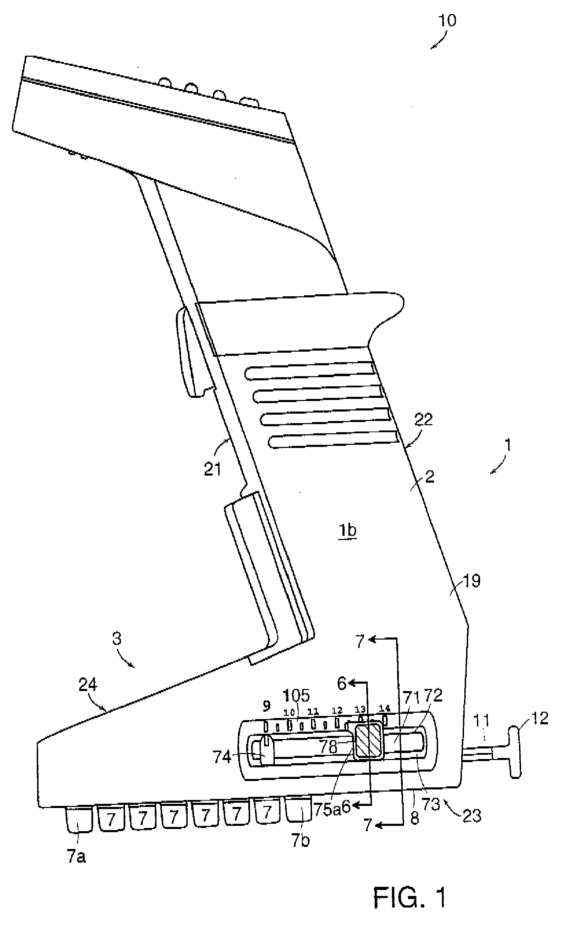

With reference now to the drawings, and more particularly to FIGS. 1-3, the pipettor 10 of the present invention will now be described. The pipettor 10 of this invention has a boot-shaped housing 1 as shown in FIG. 1 that includes a handle section 2 and a lower section 3, having a bottom section 8, from which a plurality of tip fittings 7 project downwardly. In the embodiment shown, eight tip fittings are included, but it should be appreciated that the number may vary, depending upon a user's needs.

The housing 1 of the pipetting system typically is formed of a pair of mating half shells 1a (not illustrated) and 1b. The shells 1a and 1b include sidewalls 19 and 20 (not illustrated) and front and back walls 21 and 22 that together define the handle section 2 and the lower section 3. The front, back and bottom of the lower section 3 are enclosed by the walls 21, 22 and 23, while the top of the bottom section forward of the handle is enclosed by wall 24.

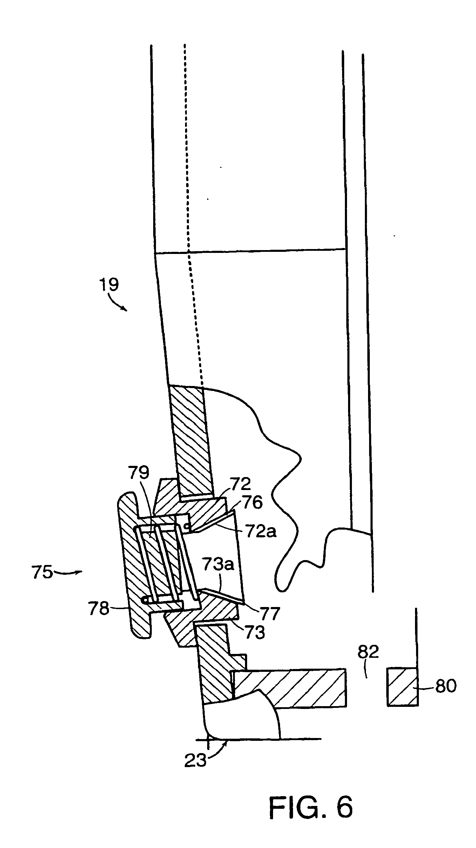

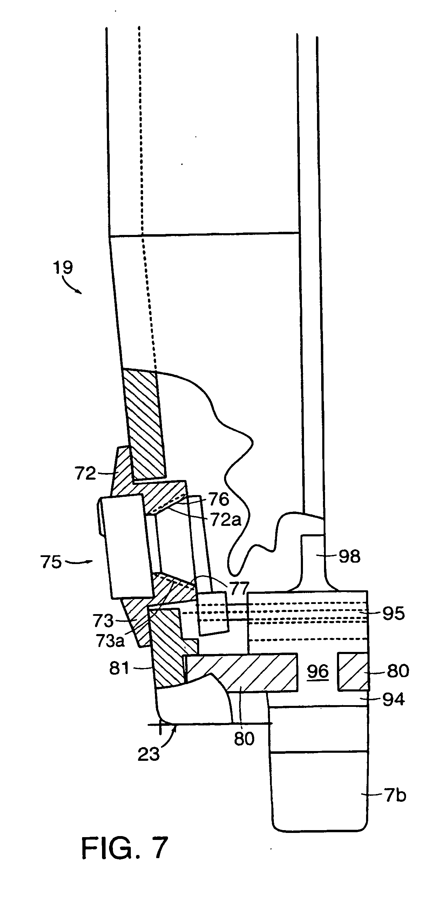

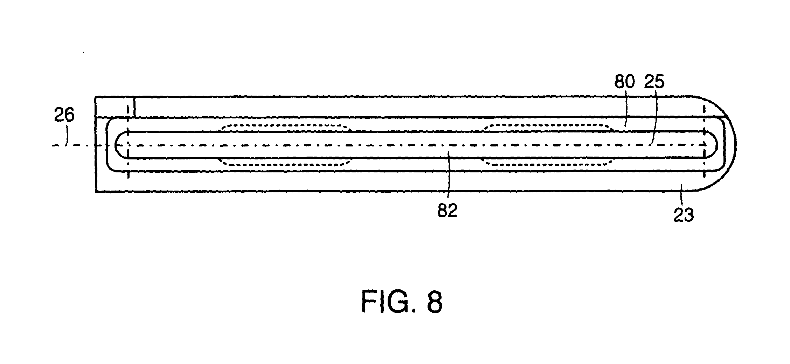

As shown in FIG. 8, all but one (fitting 7a) of the tip fittings 7 slide along an elongated aperture 25 provided in the bottom wall 23. The aperture 25 extends substantially the full length thereof symmetrical with respect to the parting line 26 that joins the two shells. FIGS. 6 and 7 show a tip fitting mounting plate 80, which is secured immediately above the bottom wall 23 of the housing by slots 81 formed in each half shell 1a and 1b. The tip fitting mounting plate 80 includes an elongated slotted track 82. The elongated slotted track 82 is narrower and somewhat shorter than the aperture 25 in the bottom wall 23.

As shown in FIG. 7, each of the tip fittings disposed in the elongated slotted track 82 includes a stem 94. The width of stem 94 at its upper end is larger than the width of the elongated slotted track 82. Consequently, the edges of the stem 94 bear against the lower surface of the mounting plate 80. Above the stem 94 each tip fitting has a waist 96 which rides along the elongated slotted track 82. Each tip fitting has a shoulder 95 above the waist 96. The shoulder 95 has a width greater than the elongated slotted track 82, which forms a track along which all the tip fittings 7 are slidably disposed, and which guides tip fittings 7. Tip fitting 7a is fixed with respect to the track and does not move. Therefore, with the exception of tip fitting 7a, the tip fittings may be moved toward and away from the front wall 21.

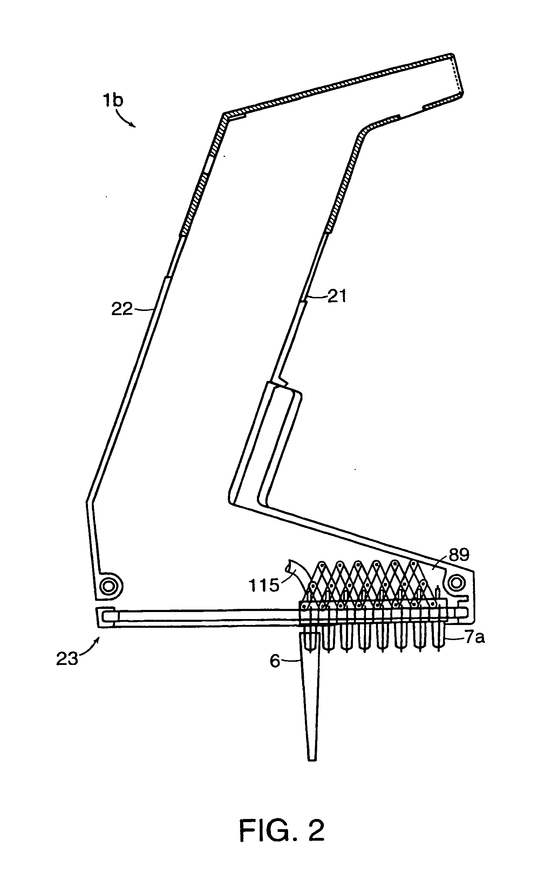

Referring now to FIG. 2, pipette tips 6 are attachable to the tip fittings 7. Those of ordinary skill in the art will recognize that many types of pipette tips are available which may be used interchangeably provided that they are compatible with the size of the tip fittings 7. The upper end of each tip fitting carries a nipple 98 which in turn is connected to a duct 115, only an exemplary one of which is shown. A passage extends through each tip fitting from the lower end of the stem 94 to the upper end of nipple 98, which passage is in fluid communication with each duct 115. The pipetting system 10 includes a means for drawing liquid in metered volumes into the tips 6 and for expelling the liquid from the tips. This feature is not part of the present invention, and is well known to one of ordinary skill. This feature is described in U.S. patent No. 5,061,449, assigned to the assignee of the present application.

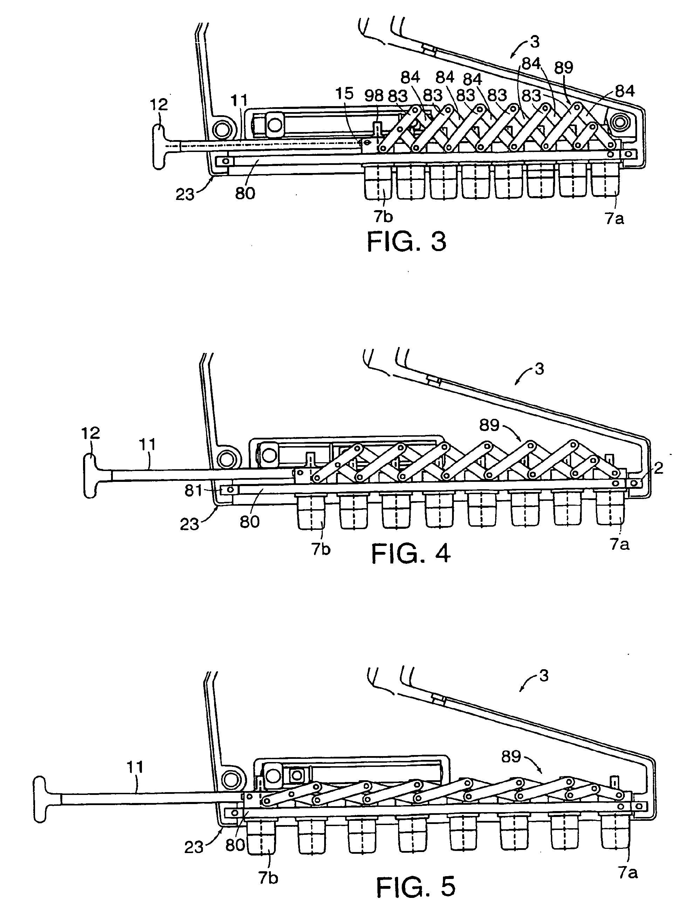

The tip fittings 7 are connected together by a linkage that maintains a substantially identical, uniform spacing between each of the tip fittings, regardless of the position of the tip fittings. In a preferred embodiment shown in FIGS. 2-5, a pantographic linkage 89 is used. As shown in FIG. 3, the pantographic linkage of the preferred embodiment includes intersecting first links 83 and second links 84. A first, lower end of each first link 83 is pivotably mounted to an associated tip fitting 7, An upper, second end of each second link 84 is pivotably mounted to an upper second end of an immediately adjacent first link 83. A second, lower end of each second link is pivotably mounted to an immediately adjacent tip fitting 7. Associated first links 83 and second links 84 are pivotably coupled at their respective centers,

An actuating rod 11 carrying a knob 12 on its distal end projects rearwardly away from the lower section 3 and is secured at its proximal end 15 within the housing 1 to the rear-most tip fitting 7b. By manually pushing and pulling the knob 12 and rod 11, the tip fittings are quickly and accurately moved to the desired spacings between uniformly spaced minimum and maximum positions. FIG, 3 shows the tip fittings with the minimum spacing, FIG. 4 shows an intermediate spacing, while FIG. 5 shows the linkage 89 fully extended so that the tip fittings 7 are at their maximum spacing. [paragraph indentation removed] As shown in FIG. 1, side wall 19 has an elongated opening 71, Referring now to FIGS. 1 and 6, upper and lower rails 72 and 73 are disposed parallel to and on either side of opening 71. The rails 72 and 73 extend along the direction of travel of the tip fittings. The rails include respective opposed surfaces 72a and 73a that form an acute angle with respect to plate 80 and that are angled with respect to one another such that the surfaces 72a and 73a of respective rails 72 and 73 are closer together facing side wall 19 than facing inwardly away from side wall 19 and toward side wall 20. The surfaces 72a and 73a of respective rails 72 and 73 are friction surfaces and contain serrations or ridges or are otherwise roughened as shown in FIGS. 6 and 7. A finger actuated stop 75 such as a button having a finger engageable surface 78 is also slidably engaged with the rails. The stop 75 has serrated, ridged or roughened friction surfaces 76 and 77 disposed parallel to respective surfaces 72a and 73a of respective rails 72 and 73, and which are urged into positive engagement with the rails 72 and 73 by biasing spring 79, as shown in FIG. 6. Spring 79 bears against rails 72 and 73 and pushes stop 75 outwardly. Applying finger pressure to the stop 75 toward wall 19 compresses the spring and releases the surfaces 76 and 77 from engagement with surfaces 72a and 73a of respective rails 72 and 73, The stop is then movable along rails 72 and 73 and within opening 71. [A second finger actuated stop (not shown) may be included within the rails to limit the contraction of the pantographic linkage.] As shown in FIG. 1, a second finger actuated stop [(not shown)] 110 may be included within the rails to limit the contraction of the pantographic linkage.

Preferably, a spacing indicator 74 is slidably engaged with the rails 72 and 73 and is connected to the rear-most tip fitting 7b. However, indicator 74 could be affixed to another tip fitting 7, if desired. Indicator 74 moves with tip fitting 7b and provides an indication of the spacing between adjacent tip fittings, Indicator 74 extends through opening 71 to be externally visible. A visual scale 105, as shown in FIG. 1, is provided along opening 71 and is calibrated to provide the spacing between each tip fitting for a particular location of indicator 74 with respect to scale 105. When the spacing indicator 74 engages a shoulder 75a or surface on the stop 75, or on stop 110, the spacing between the tip fittings is that shown on scale 105 with which indicator 74 is aligned. The spacing between the tip fittings may alternatively or additionally be positively established by notches provided in the rod 11 corresponding with a ball detent as disclosed in U.S. Patent No. 5,061,449.

It will be appreciated that the tip fittings 7 are designed to slide in the tip fitting mounting plate 80 in response to movement of linkage 89. When linkage 89 is extended, the spacing between tip fittings 7 increases. Conversely, when linkage 89 is contracted, the spacing between tip fittings 7 decreases. Pulling the actuating rod 11 away from the housing 1 increases the spacing between tip fittings 7. Conversely, pushing the actuating rod 11 toward the housing 1 decreases the spacing between tip fittings 7.

In operation, the finger actuated stop 75 may be adjustably set with reference to the scale 105 to provide a uniform spacing between tip fittings. Stop 75 is pushed inwardly with a finger and slidably moved within the opening 71 until stop 75 is aligned with a desired reading on scale 105. Stop 75 is then released and surfaces 76 and 77 engage respective surfaces 72a and 73a to hold stop 75 in place. The user then grasps knob 12 and moves rod 11 until indicator 74 abuts shoulder 75a on stop 75, or on stop 110. At that point, tip fittings 7 are uniformly spaced apart as indicated by the reading on the scale 105 aligned with indicator 74. The pipettor is now ready for use.

Modifications and Improvements will occur within the scope of this invention to those skilled in the art, and the above description is intended to be exemplary only.

## Claims

1. A multi-channel pipetting system (10), comprising:
a housing (1) for the pipetting system;
a slotted track (82) connected to the housing;
a plurality of pipette tip fittings (7) slidably mounted on the track;
an actuator for varying the size of the spacing between adjacent tip fittings; **characterized in that** it comprises:
a linkage (89) coupling together each of said tip fittings (7) to maintain a substantially identical spacing between each adjacent pair of tip fittings regardless of a size of the spacing between adjacent tip fittings; and
at least one stop (75) slidably mounted on an elongated opening (71) provided in said housing (1) for limiting extension of the linkage (89) for adjustably limiting the spacing between adjacent tip fittings.

2. The pipetting system of claim 1, wherein said at least one stop (75) comprises:
a rail;
a button having a finger engageable surface (78) for depression of the button and being structured to slide along said rail;
friction surfaces disposed on an outer surface of said button;
friction surfaces disposed on said rail; and
a biasing member (79) for urging the friction surfaces on said button against the friction surfaces on said rail when said button is not depressed.

3. The pipetting system of claim 1 or 2, wherein said linkage (89) comprises a pantographic linkage.

4. The pipetting system of any one of claims 1 to 3, wherein said housing further comprises a scale (105) which indicates the spacing between adjacent tip fittings.

5. The pipetting system of any one of claims 1 to 4, further comprising a second stop (110) slidably engageable with said housing (1) to limit contraction of the linkage.

6. The pipetting system of claim 5, wherein said second stop comprises a finger engageable button and a spring for biasing the button into a non-movable position, the button being movable when depressed.

7. The pipetting system of any one of claims 1 to 6, wherein said at least one stop comprises a spring for biasing the button into a non-movable position, the button being movable when depressed.

8. The pipetting system of any one of claims 1 to 7, wherein the slotted track is positioned in the housing.

9. The pipetting system of any one of claims 1 to 8, wherein said actuator comprises an actuating rod (11) attached to one of said tip fittings.

10. The pipetting system of any one of claims 1 to 9, further comprising a tip fitting (7a) that is not movable on said track and that is connected by said linkage to a movable tip fitting.

11. The pipetting system of claim 10, wherein said actuator comprises an actuating rod (11) attached to one of said tip fittings (7b) other than said tip fitting that is not movable on said track.

12. The pipetting system of claim 9 or 11, wherein said actuating rod (11) comprises notches and wherein said pipetting system further comprises a detent engageable with said notches on said actuating rod for establishing the size of the spacing between adjacent tip fittings.

13. The pipetting system of any one of claims 1 to 12, further comprising a plurality of ducts (115), wherein each duct has one of said tip fitting connected thereto.

## Patentansprüche

1. Mehrkanalpipettiersystem (10), mit:
- einem Gehäuse (1) für das Pipettiersystem;
- einer geschlitzten Bahn (82), die mit dem Gehäuse verbunden ist;
- einer Mehrzahl von verschieblich auf der Bahn angebrachten Pipettenspitzenpaßteilen (7);
- einem Betätigungsglied zum Variieren der Größe des Abstands zwischen benachbarten Spitzenpaßteilen;
**dadurch gekennzeichnet, daß** es umfaßt:
- ein Gestänge (89), das jede der Pipettenspitzen (7) miteinander verbindet, um unabhängig von der Größe des Abstands zwischen benachbarten Spitzenpaßteilen einen im Wesentlichen identischen Abstand zwischen jedem benachbarten Paar von Spitzenpaßteilen aufrecht zu erhalten; und
- mindestens einem Anschlag (75), der verschieblich an einer langgestreckten in dem Gehäuse (1) vorgesehenen Öffnung angebracht ist, um das Auseinanderziehen des Gestänges (89) zum einstellbaren Beschränken des Abstands zwischen benachbarten Spitzenpaßteilen zu begrenzen.

2. Pipettiersystem nach Anspruch 1, wobei der mindestens eine Anschlag (75) umfaßt:
- eine Schiene;
- einen Knopf mit einer mit einem Finger betätigbaren Fläche (78) zum Drücken des Knopfes, der so ausgebildet ist, daß er entlang der Schiene gleiten kann;
- Reibungsflächen, die an einer Außenfläche des Knopfes angeordnet sind;
- Reibungsflächen, die an der Schiene angeordnet sind;
- ein Vorspannelement (79), um die Reibungsflächen an dem Knopf gegen die Reibungsflächen an der Schiene zu pressen, wenn der Knopf nicht gedrückt ist.

3. Pipettiersystem nach Anspruch 1 oder 2, wobei das Gestänge (89) ein pantografisches Gestänge umfaßt.

4. Pipettiersystem nach einem der Ansprüche 1 bis 3, wobei das Gehäuse außerdem eine Skala (105) umfaßt, die den Abstand zwischen benachbarten Spitzenpaßteilen anzeigt.

5. Pipettiersystem nach einem der Ansprüche 1 bis 4, außerdem mit einem zweiten Anschlag (110), der verschieblich mit dem Gehäuse (1) in Eingriff bringbar ist, um das Zusammenziehen des Gestänges zu begrenzen.

6. Pipettiersystem nach Anspruch 5, wobei der zweite Anschlag einen mit einem Finger betätigbaren Knopf zur Fingereingriffsknopf und eine Feder zum Vorspannen des Knopfes in eine unbewegliche Position umfaßt, wobei der Knopf im gedrückten Zustand beweglich ist.

7. Pipettiersystem nach einem der Ansprüche 1 bis 6, wobei der mindestens eine Anschlag eine Feder zum Vorspannen des Knopfes in eine unbewegliche Position umfaßt, wobei der Knopf im gedrückten Zustand beweglich ist.

8. Pipettiersystem nach einem der Ansprüche 1 bis 7, wobei die geschlitzte Bahn in dem Gehäuse positioniert ist.

9. Pipettiersystem nach einem der Ansprüche 1 bis 8, wobei das Betätigungsglied eine Betätigungsstange (11) umfaßt, die an einem der Spitzenpaßteile befestigt ist.

10. Pipettiersystem nach einem der Ansprüche 1 bis 9, außerdem mit einem Spitzenpaßteil (7a) das nicht auf der Bahn beweglich ist und über das Gestänge mit einem beweglichen Spitzenpaßteil verbunden ist.

11. Pipettiersystem nach Anspruch 10, wobei das Betätigungsglied eine Betätigungsstange (11) umfaßt, die an einem anderen der Spitzenpaßteile (7b) als an dem Spitzenpaßteil befestigt ist, das nicht auf der Bahn beweglich ist.

12. Pipettiersystem nach Anspruch 9 oder 11, wobei die Betätigungsstange (11) Einkerbungen umfaßt und wobei das Pipettiersystem außerdem eine Raste aufweist, die mit den Einkerbungen an der Betätigungsstange in Eingriff bringbar ist, um die Größe des Abstands zwischen benachbarten Spitzenpaßteilen festzustellen.

13. Pipettiersystem nach einem der Ansprüche 1 bis 12, ferner umfassend eine Mehrzahl von Führungen (115), wobei mit jeder Führung eines der Spitzenpaßglieder verbunden ist.

## Revendications

1. Système de pipette à plusieurs canaux (10), comportant :
un boîtier (1) pour le système de pipette ;
une piste fendue (82) reliée au boîtier ;
une multiplicité de raccords d'embout de pipette (7) montés de façon coulissante sur la piste ;
un dispositif d'actionnement pour modifier la taille de l'espacement entre des raccords d'embout adjacents ; **caractérisé en ce qu'**il comporte :
un mécanisme (89) reliant ensemble chacun desdits raccords d'embout (7) afin de maintenir un espacement sensiblement identique entre chaque paire adjacente de raccords d'embout indépendamment de la taille de l'espacement entre des raccords d'embout adjacents ; et
au moins une butée (75) montée de façon coulissante sur une ouverture allongée (71) prévue dans ledit boîtier (1) afin de limiter l'extension du mécanisme (89) de façon à limiter d'une manière réglable l'espacement entre des raccords d'embout adjacents.

2. Système de pipette selon la revendication 1, dans lequel ladite au moins une butée (75) comporte :
un rail ;
un bouton ayant une surface pouvant être engagée avec un doigt (78) pour l'enfoncement du bouton et qui est structuré afin de coulisser le long dudit rail ;
des surfaces de friction disposées sur une surface extérieure dudit bouton ;
des surfaces de friction disposées sur ledit rail ; et
un élément de rappel (79) destiné à pousser les surfaces de friction sur ledit bouton contre les surfaces de friction sur ledit rail lorsque ledit bouton n'est pas enfoncé.

3. Système de pipette selon la revendication 1 ou 2, dans lequel ledit mécanisme (89) comporte un mécanisme à pantographe.

4. Système de pipette selon l'une quelconque des revendications 1 à 3, dans lequel ledit boîtier comporte en outre une échelle (105) qui indique l'espacement entre des raccords d'embout adjacents.

5. Système de pipette selon l'une quelconque des revendications 1 à 4, comportant en outre une deuxième butée (110) pouvant être engagée de façon coulissante avec ledit boîtier (1) afin de limiter la contraction du mécanisme.

6. Système de pipette selon la revendication 5, dans lequel ladite deuxième butée comporte un bouton pouvant être engagé avec un doigt et un ressort destiné à rappeler le bouton dans une position immobile, le bouton étant mobile lorsqu'il est enfoncé.

7. Système de pipette selon l'une quelconque des revendications 1 à 6, dans lequel ladite au moins une butée comporte un ressort destiné à rappeler le bouton dans une position immobile, le bouton étant mobile lorsqu'il est enfoncé.

8. Système de pipette selon l'une quelconque des revendications 1 à 7, dans lequel la piste fendue est positionnée dans le boîtier.

9. Système de pipette selon l'une quelconque des revendications 1 à 8, dans lequel ledit dispositif d'actionnement comprend une tige d'actionnement (11) fixée sur l'un desdits raccords d'embout.

10. Système de pipette selon l'une quelconque des revendications 1 à 9, comportant en outre un raccord d'embout (7a) qui n'est pas mobile sur ladite piste et qui est relié par ledit mécanisme à un raccord d'embout mobile.

11. Système de pipette selon la revendication 10, dans lequel ledit dispositif d'actionnement comporte une tige d'actionnement (11) fixée sur l'un desdits raccords d'embout (7b) autre que ledit raccord d'embout qui est mobile sur ladite piste.

12. Système de pipette selon la revendication 9 ou 11, dans lequel ladite tige d'actionnement (11) comporte des encoches et dans lequel ledit système de pipette comporte en outre un cliquet pouvant être engagé avec lesdites encoches sur ladite tige d'actionnement afin d'établir la taille de l'espacement entre des raccords d'embout adjacents.

13. Système de pipette selon l'une quelconque des revendications 1 à 12, comportant en outre une multiplicité de conduits (115), chacun des conduits ayant un desdits raccords d'embout qui y est relié.
